# EUROPEAN PATENT APPLICATION

(11) **EP 3 664 508 A1**
(43) Date of publication of application: **10.06.2020**
(21) Application number: 18850083.9
(22) Date of filing: 28.06.2018
(51) Int. Cl.: H04W 36/00, H04W 36/08, H04W 36/18, H04L 29/06

(54) **INSTANCE SWITCHING METHOD AND ASSOCIATED DEVICE**

(30) Priority: 31.08.2017 CN 201710777786
(71) Applicant: Huawei Technologies Co., Ltd., Longgang District Shenzhen, Guangdong 518129 (CN)
(72) Inventor: JIN, Aijin, Shenzhen Guangdong 518129 (CN); ZHANG, Fengyu, Shenzhen Guangdong 518129 (CN); SHUAI, Yanglai, Shenzhen Guangdong 518129 (CN); WANG, Yan, Shenzhen Guangdong 518129 (CN)
(74) Representative: Maiwald Patent- und Rechtsanwaltsgesellschaft mbH
(86) International application number: PCT/CN2018/093308
(87) International publication number: WO 2019/042000

(57) **Abstract**

Embodiments of this application disclose an instance switching method. The method includes: before target user equipment UE moves into a cell range of a second base station and successfully accesses the second base station, determining, by a first switching apparatus, that a first instance that is on a first mobile edge computing MEC platform and that provides the target UE with a target application service is to be switched to a second instance on a second MEC platform; and before the target UE successfully accesses the second base station, notifying, by the first switching apparatus, the first MEC platform that the first instance that provides the target UE with the target application service is to be switched to the second instance. When the target UE has not successfully accessed the second base station, the first MEC platform learns that the instance that provides the target UE with the target application service is to be switched to the second instance on the second MEC platform. Therefore, in subsequent instance switching, processes of searching for an MEC platform and searching for the second instance do not need to be performed, thereby reducing a service interruption time and improving user experience.

## Description

This application claims priority to Chinese Patent Application No. 201710777786.1, filed with the China National Intellectual Property Administration on August 31, 2017 and entitled "INSTANCE SWITCHING METHOD AND RELATED APPARATUS", which is incorporated herein by reference in its entirety.

### TECHNICAL FIELD

This application relates to the communications field, and in particular, to an instance switching method and a related apparatus.

### BACKGROUND

Construction of a wireless communications network is centered on a data center (English: data center). Each data center is managed by using a distributed cloud (English: cloud) technology, to form a hierarchical network system including an edge cloud (English: edge cloud) and a central cloud (English: central cloud). An application instance (instance for short below), in the data center, that provides user equipment (English: user equipment, UE for short) with an application service is deployed on each edge cloud, so that the instance providing the application service is deployed on a location closer to the UE, thereby reducing a service delay and improving service experience.

In the prior art, target UE originally accesses a first base station, and a first instance deployed on a first mobile edge platform (English: mobile edge platform) provides the target UE with a service. The mobile edge platform is also referred to as an MEC platform. When the target UE moves from a cell range of the first base station to a cell range of a second base station, the target UE is handed over from the first base station to the second base station, and the instance that provides the target UE with the service also needs to be switched to a second instance deployed on a second MEC platform.

A switching method in a current phase is: When the first base station determines that the target UE is handed over to the second base station, the first base station instructs the first MEC platform to perform instance switching, and the first MEC platform sends status content of the first instance to the second instance on the second MEC platform. In an instance switching process, the target UE cannot normally obtain a service. Because a time consumed for the switching process is relatively long, user experience on service continuity of the service is affected.

### SUMMARY

Embodiments of this application provide an instance switching method and a related apparatus, to reduce a time consumed for instance switching and improve user experience.

According to a first aspect, an embodiment of this application provides an instance switching method. The method includes:
before target user equipment UE that accesses a first base station moves into a cell range of a second base station and successfully accesses the second base station, determining, by a first switching apparatus, that a first instance that is on a first mobile edge computing MEC platform and that provides the target UE with a target application service is to be switched to a second instance on a second MEC platform, where the first MEC platform and the second MEC platform each are configured to provide UE in a cell of the first base station and UE in a cell of the second base station with the target application service. The target application service is an application service accessed by the target UE. Before the target UE successfully accesses the second base station, the first switching apparatus notifies the first MEC platform that the first instance that provides the target UE with the target application service is to be switched to the second instance. After the target UE successfully accesses the second base station, the first switching apparatus instructs the first MEC platform to switch the first instance that provides the target UE with the target application service to the second instance on the second MEC platform.

When the target UE has entered the cell range of the second base station but not successfully accessed the second base station, the first MEC platform learns that the first instance that provides the target UE with the target application service is to be switched to the second instance on the second MEC platform. In a prior technical solution, after the target UE accesses the second base station, only when instance switching is performed, a network side device starts to search for, for the target UE, a specific instance on a specific MEC platform to which the instance that provides the target UE with the target application service is to be switched. According to the foregoing method in this embodiment of this application, when the target UE has not accessed the second base station, the first MEC platform learns that the instance that provides the target UE with the target application service is to be switched to the second instance on the second MEC platform. Therefore, in subsequent instance switching, processes of searching for an MEC platform and searching for the second instance do not need to be performed, thereby reducing a service interruption time and improving user experience.

In a possible implementation, the determining, by a first switching apparatus, that a first instance that is on a first mobile edge computing MEC platform and that provides the target UE with a target application service is to be switched to a second instance on a second MEC platform may include:
obtaining, by the first switching apparatus, location information of the target UE from the first base station; determining a second switching apparatus based on the location information of the target UE; and sending a first request message including a service identifier ID of the target application service to the second switching apparatus, where the second switching apparatus is configured to provide UE connected to the second base station with an instance switching service, and the service ID of the target application service is associated with the second instance on the second MEC platform. The first switching apparatus receives, from the second switching apparatus, a first response message carrying an instance ID of the second instance, and determines, based on the instance ID of the second instance, that the first instance that is on the first MEC platform and that provides the target UE with the target application service is to be switched to the second instance on the second MEC platform.

Before notifying the first MEC platform, the first switching apparatus obtains the instance ID of the second instance from the second switching apparatus, to determine that the instance that provides the target UE with the target application service is to be switched to the second instance. When notifying the first MEC platform to prepare for the switching, the first switching apparatus may notify the first MEC platform of the instance ID of the second instance, so that the first MEC platform may determine, based on the instance ID of the second instance, that the instance that provides the target UE with the target application service is to be switched to the second instance on the second MEC platform. The first MEC platform does not need to obtain the instance ID of the second instance from the second MEC platform, so that signaling exchange of the first MEC platform is reduced, and load of the first MEC platform is reduced.

In another possible implementation, the method further includes:
creating, by the first switching apparatus, a service feature based on the instance ID of the second instance; and sending a packet forwarding policy to a first gateway, where the packet forwarding policy includes the service feature and is used to instruct the first gateway to: identify a target uplink packet based on the service feature, and forward the target uplink packet to a second gateway, where the target uplink packet is an uplink packet exchanged between the target UE and a target application service, the first gateway is configured to provide the first base station with a service, and the second gateway is configured to provide the second base station with a service.

A service forwarding tunnel is established between the first gateway and the second gateway. After the first gateway receives the packet forwarding policy, the target UE may send, in a manner of an uplink packet to the second instance by using the service forwarding tunnel, information about a transport protocol or context content used for connecting the target UE to the first instance. In an instance switching preparation phase, the uplink packet sent by the target UE may be forwarded to the second instance by using the service forwarding tunnel between the first gateway and the second gateway. However, in the prior art, after the target UE sends the uplink packet to the first gateway, if the target UE accesses the second base station and starts the instance switching when the packet has not been forwarded to the first instance, the packet cannot be forwarded to the second instance, and is discarded. According to this solution in this application, the instance switching does not cause discard of the uplink packet sent by the target UE.

According to a second aspect, an embodiment of this application provides an instance switching method. The method includes:
before target user equipment UE that accesses a first base station moves into a cell range of a second base station and successfully accesses the second base station, determining, by a first switching apparatus, that an instance that provides the target UE with a target application service is to be switched. A first MEC platform is configured to provide UE in a cell of the first base station with the target application service, and the target application service is an application service accessed by the target UE. Before the target UE successfully accesses the second base station, the first switching apparatus notifies the first MEC platform that the instance that provides the target UE with the target application service is to be switched. After the target UE successfully accesses the second base station, the first switching apparatus instructs the first MEC platform to switch the instance that provides the target UE with the target application service.

Different from the instance switching method provided in the first aspect, in this embodiment of this aspect, the first switching apparatus determines only that the instance that provides the target UE with the target application service is to be switched, and notifies the first MEC platform. After receiving the notification, the first MEC platform coordinates with a network device on a second base station side to obtain an instance ID of a destination instance, and further determines that the instance that provides the target UE with the target application service is to be switched to a second instance on a second MEC platform. In this way, the first switching apparatus determines only that the instance that provides the target UE with the target application service is to be switched, and a step of determining the second instance is performed by the first MEC platform, so that resource utilization of a network side device is improved, and load of the first switching apparatus is reduced.

According to a fourth aspect, an embodiment of this application provides a switching apparatus. The switching apparatus is the first switching apparatus according to the first aspect, and the apparatus includes:
a determining unit, configured to: before target user equipment UE moves into a cell range of a second base station and successfully accesses the second base station, determine that a first instance that is on a first mobile edge computing MEC platform and that provides the target UE with a target application service is to be switched to a second instance on a second MEC platform, where the target UE is UE that accesses a first base station, the first MEC platform is configured to provide UE in a cell of the first base station with the target application service, and the second MEC platform is configured to provide UE in a cell of the second base station with the target application service;
a notification unit, configured to: before the target UE successfully accesses the second base station, notify the first MEC platform that the first instance that provides the target UE with the target application service is to be switched to the second instance; and
an instruction unit, configured to: after the target UE successfully accesses the second base station, instruct the first MEC platform to switch the first instance that provides the target UE with the target application service to the second instance on the second MEC platform.

According to a fifth aspect, an embodiment of this application provides an instance switching system, applicable to a mobile communications network. The instance switching system includes: a first base station, a first mobile edge computing MEC platform, a second base station, a second MEC platform, a first switching apparatus, and a second switching apparatus, where the first MEC platform is configured to provide UE in a cell of the first base station with a target application service, the second MEC platform is configured to provide UE in a cell of the second base station with the target application service, the first switching apparatus is configured to provide UE connected to the first base station with an instance switching service, the second switching apparatus is configured to provide UE connected to the second base station with an instance switching service, and the first switching apparatus is the first switching apparatus described in the third aspect.

According to a sixth aspect, this application provides an instance switching apparatus. The instance switching apparatus includes: a processor, a memory, a transceiver, and a processor. The memory and the transceiver are connected by using a bus, the memory stores a computer instruction, and the processor is configured to implement, by executing the computer instruction, the method described in the first aspect or the second aspect.

According to a seventh aspect, this application provides a readable storage medium. The storage medium stores a computer instruction used to implement the method described in the first aspect or the second aspect.

According to an eighth aspect, this application provides a computer program product. The computer program product includes a computer software instruction. The computer software instruction may be loaded by a processor to implement procedures in the method described in the first aspect or the second aspect.

According to a ninth aspect, this application provides a chip system. The chip system includes a processor, used by a conversion apparatus supporting an application instance address to implement the functions in the foregoing aspects, for example, generate or process the information in the foregoing methods. In a possible design, the chip system further includes a memory. The memory is configured to store a program instruction and data that are necessary for the conversion apparatus supporting an application instance address. The chip system may include a chip, or may include a chip and another discrete component.

According to a tenth aspect, an embodiment of this application provides a communications apparatus. The communications apparatus may include an entity such as a terminal device or a chip. The communications apparatus includes a processor and a memory. The memory is configured to store an instruction, and the processor is configured to execute the instruction in the memory, so that the communications apparatus performs the method in the first aspect or the second aspect.

### BRIEF DESCRIPTION OF DRAWINGS

FIG. 1(a) is a schematic diagram of a communications network architecture according to an embodiment of this application;
FIG. 1(b) is another schematic diagram of a communications network architecture according to an embodiment of this application;
FIG. 1(c) is another schematic diagram of a communications network architecture according to an embodiment of this application;
FIG. 2 is a schematic diagram of an embodiment of instance switching according to an embodiment of this application;
FIG. 3 is a schematic diagram of another embodiment of instance switching according to an embodiment of this application;
FIG. 4 is a schematic diagram of another embodiment of instance switching according to an embodiment of this application;
FIG. 5 is a schematic diagram of another embodiment of instance switching according to an embodiment of this application;
FIG. 6 is a schematic diagram of an embodiment of a switching apparatus according to an embodiment of this application; and
FIG. 7 is a schematic diagram of another embodiment of a switching apparatus according to an embodiment of this application.

### DESCRIPTION OF EMBODIMENTS

An embodiment of this application provides an instance switching method, so that switching of an instance that provides target UE with an application service may be quickly completed. This application further provides a related switching apparatus. Descriptions are separately provided below.

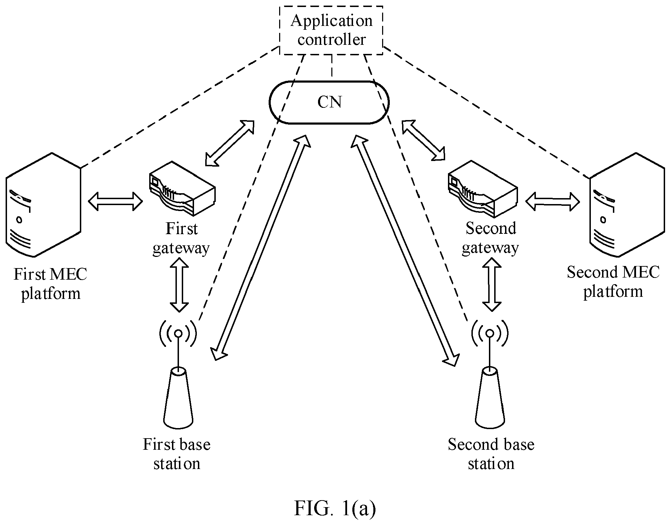

Referring to FIG. 1(a), a basic architecture of a communications network in this application includes: a core network (English: core network, CN for short) device, a first base station, a second base station, a first MEC platform, and a second MEC platform. Each MEC platform is connected to a corresponding base station by using a gateway, and each base station is connected to the core network device.

The MEC platform is an infrastructure on a mobile edge. For example, the MEC platform may include one or more servers, or one or more servers and another network device (for example, a device such as a gateway or a switch). A network resource generated by the network architecture is used to provide an instance with a service platform. At least one instance is deployed on each MEC platform, and the instance is used to provide UE with an application service. In this embodiment of this application, the application service is a service provided for a terminal by using various types of applications, for example, an internet of vehicles application service operated by a developer. The instance is a specific application deployed on different MEC platforms by an application service. Therefore, one application service may correspond to a plurality of instances. In this application, a first instance is deployed on the first MEC platform, and a second instance is deployed on the second MEC platform, where the first instance and the second instance are instances of a same application service.

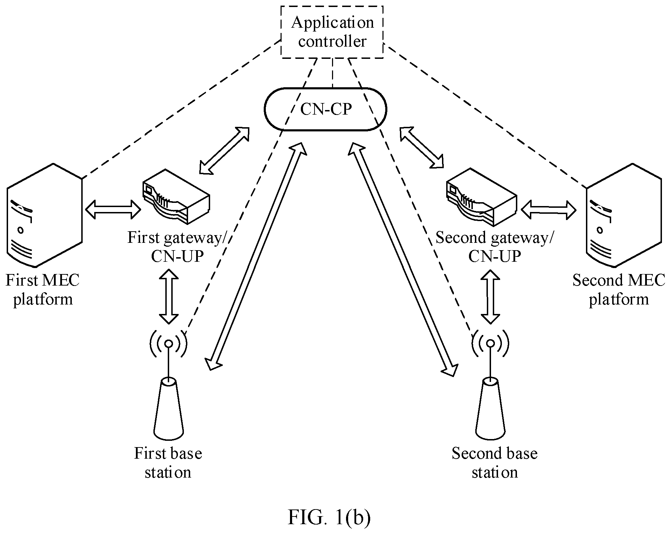

The communications network shown in FIG. 1(a) may be extended into a plurality of variants. For example, a core network may be divided into a control plane (English: control plane, CP for short) and a user plane (English: user plane, UP for short), to form a control and user plane separation (English: control and user plane separation, CUPS for short) communications network, as shown in FIG. 1(b). A device CN-CP indicates that a core network device includes only a control plane function. The user plane of the core network is implemented by each gateway, to be specific, each gateway belongs to a device on a core network side and performs a user plane function of the core network. A data connection between the gateway and the base station is managed and controlled by the core network control plane together.

The base station (including the first base station and the second base station) in this application is a new radio gNB (English: new radio gNB, NR gNB for short) or another radio access device. This is not limited in this application.

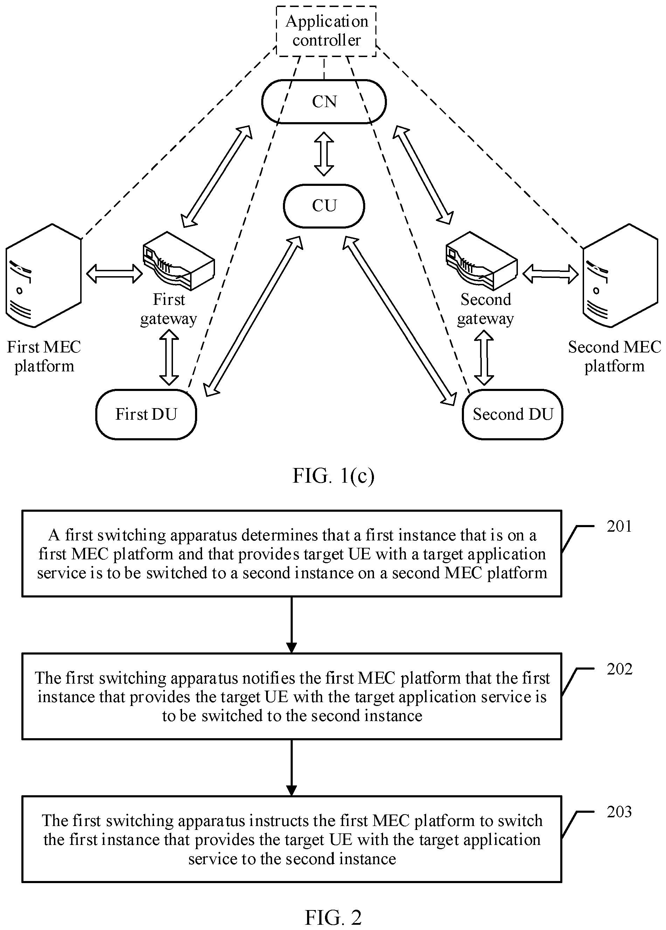

Optionally, the base station in this application may further be divided into a centralized unit (English: centralized unit, CU for short) and a distributed unit (English: distributed unit, DU for short), as shown in FIG. 1(c). In such a network architecture, an information exchange function of a data plane of the base station can be implemented by the DU, and a management function of the control plane needs to be implemented by the CU.

Instances of the application service in this application are deployed on a plurality of MEC platforms near the base station in a distributed manner, and each instance is used to provide UE in a cell of a base station connected to each MEC platform with the application service. For example, instances of an ultra-reliable low-latency communication (English: ultra reliable and low latency communication, URLLC for short) application are deployed on a plurality of MEC platforms near the base station. The URLLC instance deployed on each MEC platform provides the UE with a URLLC service.

An identifier (English: identification, ID for short) corresponding to each application service may be recorded on the MEC platform. The application service ID (service ID for short below) is used to uniquely identify a corresponding application service, to distinguish between different application service areas. The service ID may be in a form of a domain name (English: domain name), or the MEC platform may centrally allocate a service ID to each application service. For example, the service ID may be an internet protocol (English: Internet Protocol, IP for short) address. Alternatively, the service ID may be in another form. This is not limited in this application.

An instance of each application service further has an instance ID. The instance ID is used to uniquely identify a corresponding instance, to distinguish between different instance areas of a same application service. In other words, different instances of a same application service have a same service ID, but have different instance IDs. The instance ID may be in a form of an IP address of the instance, or may be in another form. This is not limited in this application. It should be noted that, when the service ID and the instance ID are both in a form of an IP address, a transmit end or a receive end may distinguish between the service ID and the instance ID by using different fields of a packet. For example, the transmit end and the receive end agree on that the first field of the packet is the service ID and the second field is the instance ID. When sending the packet to the receive end, the transmit end sets an IP address of the application service in the first field of the packet and sets an IP address of the instance in the second field of the packet. After receiving the packet, the receive end can parse out, from a corresponding field, the IP address of the application service and the IP address of the instance.

Based on FIG. 1(a) to FIG. 1(c), a switching apparatus is further introduced into the communications network in this application. Each switching apparatus corresponds to one or more base stations. For example, a first switching apparatus corresponds to the first base station, and a second switching apparatus corresponds to the second base station. Each switching apparatus is configured to: coordinate with a corresponding MEC platform to switch, based on a location to which target UE moves, an instance that provides the UE with an application service.

A position of the switching apparatus in the communications network is not limited in this application. The switching apparatus may be an independent device, or may be disposed together with one of network devices such as a base station, a gateway, or a core network device, or may be disposed in a network device such as a base station, a gateway, or a core network device in a form of a functional module, or may be directly implemented by a base station, a gateway, or a core network device. Alternatively, the switching apparatus may be in another form. This is not limited in this application.

Based on the switching apparatus, this application provides an instance switching method. When target UE moves from a cell range of a first base station to a cell range of a second base station, the switching apparatus switches an instance that provides the target UE with an application service. For a procedure, refer to FIG. 2.

Before the procedure starts, the target UE is located in the cell range of the first base station and accesses the first base station. The target UE is connected to a first instance of a target application service. When the target UE moves into the cell range of the second base station, the procedure provided in this embodiment starts.

201. A first switching apparatus determines that the first instance that is on a first MEC platform and that provides the target UE with the target application service is to be switched to a second instance on a second MEC platform.

Before the target UE moves into the cell range of the second base station and successfully accesses the second base station, the first switching apparatus determines that the first instance that is on the first MEC platform and that provides the target UE with the target application service is to be switched to the second instance on the second MEC platform. When the target UE moves from the cell range of the first base station to the cell range of the second base station, the first switching apparatus starts a procedure of determining that the instance that provides the target UE with the target application service is to be switched to the second instance on the second MEC platform, and at the same time, the target UE also starts a procedure of accessing the second base station. Because it takes some time for access to the second base station by the target UE, the first switching apparatus starts, before the target UE successfully accesses the second base station, the procedure of determining that the instance that provides the target UE with the target application service is to be switched to the second instance on the second MEC platform.

The first switching apparatus may determine, in a plurality of manners, that the instance that provides the target UE with the target application service is to be switched. For example, when determining that the target UE is to be handed over to the second base station, the first base station notifies the first switching apparatus, and further, the first switching apparatus determines that the instance that provides the target UE with the target application service is to be switched. Alternatively, the first switching apparatus may determine, based on location information of the target UE, that the target UE enters the cell range of the second base station, and further determine that the instance that provides the target UE with the target application service is to be switched. Alternatively, the first switching apparatus may determine, in another manner, that the instance that provides the target UE with the target application service is to be switched. This is not limited herein.

The first switching apparatus may determine, in a plurality of manners, that the instance that provides the target UE with the target application service is to be switched to the second instance on the second MEC platform.

For example, in a possible implementation, the first switching apparatus stores a correspondence between the first base station and the first MEC platform, and the first switching apparatus has a capability of obtaining status information of UE accessing the first base station. When the target UE accesses the first base station and accesses the first instance providing the target application service, the first switching apparatus obtains a UE ID of the target UE, a service ID of the target application service, and an instance ID of the first instance. For example, the first switching apparatus stores IDs of network devices on a plurality of other base station sides and a service correspondence between the network devices on the plurality of other base station sides, where the plurality of other base stations are adjacent to the first base station, the IDs of the network devices on the plurality of other base station sides include an ID of the second base station and an ID of a second switching apparatus, and the service correspondence between the network devices on the plurality of other base station sides includes a service correspondence between the second base station and the second switching apparatus. When the target UE moves into the cell range of the second base station, the first base station obtains a measurement report sent by the target UE, and the first base station sends the location information of the target UE in the measurement report to the first switching apparatus. The first switching apparatus may determine, based on the location information of the target UE, that the target UE enters the cell range of the second base station. The first switching apparatus sends the service ID of the target application service to a network device on a second base station side (where, for example, the network device on the second base station side is the second base station or the second switching apparatus). The network device on the second base station side obtains, based on the service ID, an instance ID of the second instance from the corresponding second MEC platform, and further feeds back the instance ID of the second instance to the first switching apparatus. If the second base station corresponds to a plurality of MEC platforms, the network device on the second base station side further needs to feed back an ID of an MEC platform corresponding to the second instance to the first switching apparatus. If the second base station corresponds to only one MEC platform, because the first switching apparatus stores a correspondence between a plurality of other base stations and MEC platforms served by the plurality of other base stations, the plurality of other base stations are adjacent to the first base station, and the plurality of other base stations include the second base station, the first switching apparatus can determine the unique second MEC platform by using the second base station. After receiving the instance ID of the second instance, the first switching apparatus can determine that the first instance that provides the target UE with the target application service is to be switched to the second instance provided by the second MEC platform corresponding to the second base station.

In another possible implementation, when determining, based on the location information of the UE, that the target UE is to be handed over to the second base station, the first base station notifies the first switching apparatus of the ID of the second base station, and further, the first switching apparatus determines that the first instance that provides the target UE with the target application service is to be switched to the second instance provided by the second MEC platform corresponding to the second base station (this is similar to the determining manner described in the previous implementation, and details are not described herein).

Alternatively, the first switching apparatus may determine, in another manner, that the first instance that provides the target UE with the target application service is to be switched to the second instance on the second MEC platform. This is not limited herein.

The location information of the target UE has a plurality of forms, for example, may be a base station ID of the second base station or a cell ID of a cell corresponding to the second base station, may be a gateway ID of a gateway corresponding to the second base station, may be geographic location information of the target UE, or may be an ID of the second MEC platform, or the like. This is not limited herein.

202. The first switching apparatus notifies the first MEC platform that the first instance that provides the target UE with the target application service is to be switched to the second instance.

Before the target UE successfully accesses the second base station, the first switching apparatus notifies the first MEC platform that the first instance that provides the target UE with the target application service is to be switched to the second instance. For example, the first switching apparatus sends a switching preparation message to the first MEC platform. The switching preparation message includes the UE ID of the target UE, the service ID of the target application service, the ID of the second MEC platform, and the instance ID of the second instance. After receiving the switching preparation message, the first MEC platform learns that the instance that provides the target UE with the target application service is to be switched to the second instance on the second MEC platform.

Optionally, the first MEC platform may further forward the switching preparation message to the second MEC platform, so that the second MEC platform also learns that the instance that provides the target UE with the target application service is to be switched to the second instance on the second MEC platform. Alternatively, in a process in which the first switching apparatus obtains the instance ID of the second instance by using the network device on the second base station side, after obtaining the instance ID of the second instance on the second MEC platform, the network device on the second base station side notifies the second MEC platform that the instance that provides the target UE with the target application service is to be switched to the second instance on the second MEC platform. In this way, before the target UE enters the cell range of the second base station and successfully accesses the second base station, the first MEC platform and the second MEC platform both learn that the instance that provides the target UE with the target application service is to be switched to the second instance on the second MEC platform. In a prior technical solution, after the target UE accesses the second base station, only when instance switching is performed, a network side device starts to search for, for the target UE, a specific instance on a specific MEC platform to which the instance that provides the target UE with the target application service is to be switched. During the instance switching, the target UE cannot perform normal service work with the instance. Consequently, user experience on service continuity of the service is affected. According to the foregoing method in this embodiment, before the target UE successfully accesses the second base station, the first MEC platform and the second MEC platform both learn that the instance that provides the target UE with the target application service is to be switched to the second instance on the second MEC platform. Therefore, in subsequent instance switching, processes of searching for an MEC platform and searching for the second instance do not need to be performed, thereby reducing a service interruption time and improving user experience.

Optionally, after receiving the switching preparation message, the first MEC platform may further coordinate with the second MEC platform to perform switching preparation work based on an indication of the switching preparation message. For example, the first MEC platform may send some data of the target UE on the first instance to the second MEC platform. For example, the data includes: a transport protocol between the target UE and the first instance or static context content. The switching preparation work cannot complete all data migration between the first instance and the second instance, but is to update information such as the foregoing transport protocol or the static context content in advance to the second instance. In a subsequent step, only when the first MEC platform coordinates with the second MEC platform to perform the instance switching, all data related to the target UE in the first instance is updated to the second instance. The first MEC platform may also coordinate, in another manner, with the second MEC platform to perform the switching preparation work. This is not limited in this application.

Before the target UE successfully accesses the second base station, the first MEC platform coordinates with the second MEC platform to update some data related to the target UE in the first instance to the second instance. In this way, in a subsequent instance switching process, the data that has been updated to the second instance does not need to be sent again, thereby reducing an instance switching time.

It should be noted that a procedure in which the first switching apparatus determines that the first instance that is on the first MEC platform and that provides the target UE with the target application service is to be switched to the second instance on the second MEC platform, the first switching apparatus sends the switching preparation message to the first MEC platform, and the first MEC platform coordinates with the second MEC platform to perform a switching preparation procedure. The switching preparation procedure and a procedure of accessing the second base station by the target UE may be simultaneously performed in a same time period. In other words, the procedure in which the first switching apparatus determines that the first instance that is on the first MEC platform and that provides the target UE with the target application service is to be switched to the second instance on the second MEC platform, the first switching apparatus sends the switching preparation message to the first MEC platform, and the first MEC platform coordinates with the second MEC platform to perform switching preparation and the procedure of accessing the second base station by the target UE do not affect each other. When the target UE enters the cell range of the second base station, the target UE triggers, at the same time, the step of determining, by the first switching apparatus, that the first instance that is on the first MEC platform and that provides the target UE with the target application service is to be switched to the second instance on the second MEC platform and the procedure step of accessing the second base station by the target UE.

A time of accessing a base station by UE in the prior art is approximately 50 ms. However, a time consumed by the procedure in which the first switching apparatus determines that the first instance that is on the first MEC platform and that provides the target UE with the target application service is to be switched to the second instance on the second MEC platform, the first switching apparatus sends the switching preparation message to the first MEC platform, and the first MEC platform coordinates with the second MEC platform to perform switching preparation is far less than 50 ms (excluding abnormal network conditions). Therefore, within a time period from a moment at which the target UE starts to access the second base station to a moment at which the target UE completes access to the second base station, the procedure in which the first switching apparatus determines that the first instance that is on the first MEC platform and that provides the target UE with the target application service is to be switched to the second instance on the second MEC platform, the first switching apparatus sends the switching preparation message to the first MEC platform, and the first MEC platform coordinates with the second MEC platform to perform switching preparation has been completed, and a time consumed by the procedure is less than a time consumed by the target UE in accessing the second base station.

For a future 5G low-latency service, a dual connectivity manner is used for an air interface. To be specific, a dual connectivity technology means that at the same time when the target UE accesses the second base station, a connection to the first base station remains uninterrupted. In other words, after the target UE accesses the second base station, the target UE maintains an air interface connection to the first base station, and the target UE maintains a service connection to the first instance on the first MEC platform. For ease of understanding, the following uses an example to describe a time consumed in this solution in this embodiment.

For example, in a prior solution, the time consumed by the target UE in accessing the second base station is 50 ms, and a time consumed by instance switching (including determining the second instance and data synchronization between instances) in the prior art is 30 ms, where a time consumed for determining the second instance is 20 ms, a time consumed by data synchronization between instances is 10 ms. If the instance switching is not performed based on the dual connectivity technology, that is, the target UE first accesses the second base station, and then performs the instance switching, a total time that needs to be consumed by the target UE from a moment at which the target UE is handed over to the second base station to a moment at which the instance switching is completed is at least 80 ms. A service interruption time sensed by a user side is 80 ms. Because the target UE disconnects from the first base station, the target UE cannot perform a normal service with the first instance on a first base station side. After the target UE accesses the second base station, in an instance switching process, the target UE still cannot perform a normal service with the second instance on the second base station side. Even if the instance switching is performed based on the dual connectivity technology, the total time that needs to be consumed by the target UE from the moment at which the target UE is handed over to the second base station to the moment at which the instance switching is completed is still at least 80 ms. For the user side, service interruption duration that can be sensed by the user side is 30 ms. Because during a 50 ms time period of accessing the second base station by the target UE, the target UE may still perform a normal service with the first instance on the first base station side, but after the target UE accesses the second base station, the UE cannot perform a normal service during the instance switching.

However, based on this solution of this application, in the same time period of accessing the second base station, the target UE searches for a target instance, that is, the second instance has been determined. In this case, a total time consumed for accessing the second base station by the target UE and determining the second instance by the network side device (for example, the first MEC platform) is only 50 ms (because the network side device finishes determining the second instance within the time period in which the target UE accesses the second base station, in the 50 ms time period, the user side does not sense service interruption because the target UE can still perform a normal service with the first instance on the first base station side). A time that needs to be consumed by the data synchronization in the instance switching is 10 ms. Therefore, based on this solution of this application, a total time that needs to be consumed by the target UE from the moment at which the target UE is handed over to the second base station to the moment at which the instance switching is completed may be at least 60 ms. The instance switching time is 10 ms. For the user side, the service interruption duration that can be sensed by the user side is 10 ms. Therefore, compared with a prior technical solution, in this solution of this application, the instance switching can be completed faster, the service interruption time is shortened, and continuity of the application service is improved.

203. The first switching apparatus instructs the first MEC platform to switch the first instance that provides the target UE with the target application service to the second instance.

After the target UE accesses the second base station, the first switching apparatus sends a switching instruction message to the first MEC platform, where the switching instruction message is used to instruct the first MEC platform to switch the first instance that provides the target UE with the target application service to the second instance.

After receiving the switching instruction message, the first MEC platform coordinates with the second MEC platform to switch the first instance that provides the target UE with the target application service to the second instance. For example, the first MEC platform sends information and data of the first instance that are related to the target UE to the second MEC platform, and the second MEC platform imports the received information and data into the second instance, to complete updating of information and data of the second instance. The information includes information such as a transport protocol used when the target UE performs data transmission with the first instance and an IP address of the target UE, and the data includes data such as context content of a service performed between the target UE and the first instance. It should be noted that, before the instance switching, if the first MEC platform and the second MEC platform have coordinately updated some data (for example, the transport protocol and the static context content) in the first instance to the second instance, in this step, the first MEC platform does not need to send the data to the second MEC platform, thereby reducing the instance switching time.

It should be noted that, because the first MEC platform has finished determining the second instance and switching preparation with the second MEC platform in step 202, the instance switching in this step is faster than that in the prior art. In this way, the target UE accesses the second base station, and exchanges data with the second instance that provides the target application service and that is provided on the second MEC platform, thereby implementing quick switching between instances that provide the target UE with the target application service.

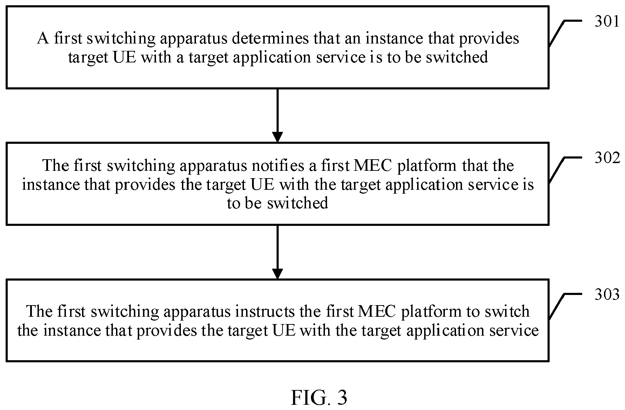

In the solution described in the embodiment of FIG. 2, before sending the switching preparation message to the first MEC platform, the first switching apparatus has determined that the first instance that provides the target UE with the target application service is to be switched to the second instance on the second MEC platform. Optionally, a step of determining that the first instance that provides the target UE with the target application service is to be switched to the second instance on the second MEC platform may also be performed by the first MEC platform. With reference to FIG. 3, a procedure of another embodiment of an instance switching method provided in this application is described below by using an example.

301. A first switching apparatus determines that an instance that provides target UE with a target application service is to be switched.

A manner in which the first switching apparatus determines that the instance that provides the target UE with the target application service is to be switched is described in step 201 in the embodiment shown in FIG. 2. Details are not described herein again. Different from step 201, in this step, the first switching apparatus determines only that the instance that provides the target UE with the target application service is to be switched, but does not determine that the instance that provides the target UE with the target application service is to be switched to a second instance on a second MEC platform.

302. The first switching apparatus notifies a first MEC platform that the instance that provides the target UE with the target application service is to be switched.

Before the target UE successfully accesses a second base station, the first switching apparatus sends a switching preparation message to the first MEC platform. The switching preparation message includes a UE ID of the target UE, a service ID of the target application service, and location information of the target UE.

The first MEC platform determines the second MEC platform based on the location information of the target UE. The first MEC platform sends the service ID of the target application service to the second MEC platform, and then the second MEC platform finds, based on the service ID of the target application service, the second instance corresponding to the target application service, and obtains an instance ID of the second instance. In a coordination process, the second MEC platform also learns that the instance that provides the target UE with the target application service is to be switched to the local second instance.

303. The first switching apparatus instructs the first MEC platform to switch the instance that provides the target UE with the target application service.

For detailed content, refer to step 203 in the embodiment of FIG. 2. Details are not described herein again.

Different from the instance switching method provided in the embodiment of FIG. 2, in the embodiment of FIG. 3, the first switching apparatus determines only that the instance that provides the target UE with the target application service is to be switched, and notifies the first MEC platform. After receiving the notification, the first MEC platform coordinates with a network device on a second base station side to obtain an instance ID of a destination instance, and further determines that the instance that provides the target UE with the target application service is to be switched to the second instance on the second MEC platform. In this way, the first switching apparatus determines only that the instance that provides the target UE with the target application service is to be switched, and a step of determining the second instance is performed by the first MEC platform, so that resource utilization of a network side device is improved, and load of the first switching apparatus is reduced.

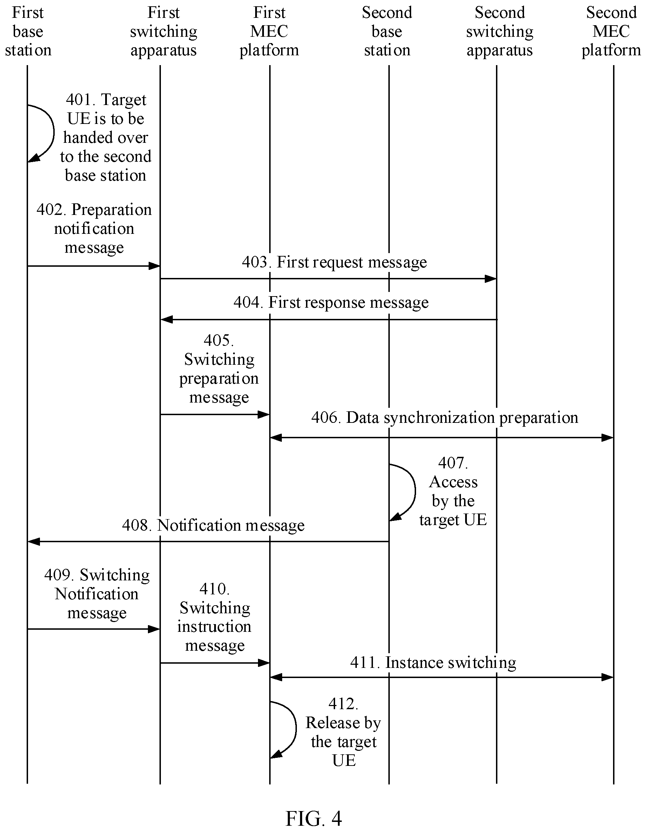

The foregoing embodiment describes a procedure of an application service switching method provided in this application. In an embodiment of FIG. 4, the foregoing first switching apparatus is an independent device. With reference to FIG. 4, a detailed procedure of another embodiment of an instance switching method provided in this application is described below by using an example.

401. A first base station decides that target UE is to be handed over to a second base station.

Before the target UE enters a cell range of the second base station, but has not successfully accessed the second base station, the first base station decides that a network connection of the target UE is to be switched from the first base station to the second base station.

For example, when the target UE moves into the cell range of the second base station, the target UE sends a measurement report to the first base station, and the first base station decides, based on the measurement report, that a base station to which the target UE is to be handed over is the second base station. Alternatively, the first base station sends a handover request to the second base station based on the measurement report, and after receiving a handover request acknowledgment message from the second base station, the first base station decides that a base station to which the target UE is to be handed over is the second base station.

402. The first base station sends a preparation notification message to a first switching apparatus.

After confirming that a base station of the target UE is to be switched, the first base station sends a preparation notification message to the first switching apparatus. The first switching apparatus receives the preparation notification message.

The preparation notification message is used to notify the first switching apparatus that the target UE is to access the second base station, to trigger an instance switching preparation procedure. In an implementation, the preparation notification message carries a UE ID of the target UE and a base station ID of the second base station. In another implementation, the preparation notification message may not carry the base station ID of the second base station, but carry the UE ID of the target UE and location information of the target UE. The first switching apparatus determines, based on the location information of the target UE, the second base station to be accessed by the target UE. Optionally, each switching apparatus may further store a service range of each switching apparatus in a communications network. Therefore, the first switching apparatus may further determine a second switching apparatus based on the location information of the UE. A scenario in which the communications network includes a plurality of switching apparatuses is further described in step 403.

403. The first switching apparatus sends a first request message to the second switching apparatus.

In a communications network architecture to which this embodiment is applied, the first switching apparatus is a network device on a first base station side, and the second switching apparatus is a network device on a second base station side. A function of the second switching apparatus is the same as that of the first switching apparatus, and the second switching apparatus and the first switching apparatus are both configured to provide an instance switching service for UE connected to a base station corresponding to the second switching apparatus or the first switching apparatus. A manner of establishing a communication connection between switching apparatuses is similar to a manner of establishing a communication connection between base stations. For example, the first switching apparatus stores communication identifiers of switching apparatuses corresponding to a plurality of nearby base stations, where the communication identifiers include a communication identifier of the second switching apparatus. When a communication connection needs to be established, the first switching apparatus finds the communication identifier of the corresponding second switching apparatus by using the base station ID of the second base station, and then establishes the communication connection to the second switching apparatus based on the communication identifier. Alternatively, the first switching apparatus sends a broadcast signal to a plurality of nearby switching apparatuses, and after receiving a plurality of feedbacks, chooses to establish the communication connection to the corresponding second switching apparatus based on the base station ID of the second base station. There are a plurality of manners of establishing a communication connection between the first switching apparatus and the second switching apparatus. This is not limited in this application.

After receiving the preparation notification message, the first switching apparatus establishes, based on the base station ID of the second base station in the preparation notification message, a communication connection to the second switching apparatus corresponding to the second base station, and sends the first request message to the second switching apparatus. The first request message includes the UE ID of the target UE and a service ID of a target application service, and the first request message is used to request the second switching apparatus to return information about a new instance providing the target application service on the target UE. A first response message returned by the second switching apparatus to the first switching apparatus carries the information about the determined new instance.

Optionally, in a possible implementation, after receiving a switching notification message and when establishing, based on the base station ID of the second base station in the switching notification message, the communication connection to the second switching apparatus corresponding to the second base station, the first switching apparatus sends the first request message to the second switching apparatus. In other words, the first switching apparatus adds the first request message to communication connection establishment request information sent to the second switching apparatus. The second switching apparatus adds the first response message corresponding to the first request message to communication connection establishment acknowledgment information fed back to the first switching apparatus.

Optionally, in another possible implementation, the communication connection between the first switching apparatus and the second switching apparatus may also be established when the switching apparatuses are deployed and installed. Usually, a switching apparatus performs service exchange only with a switching apparatus corresponding to an adjacent base station. Therefore, because the first base station is adjacent to the second base station, when the first switching apparatus and the second switching apparatus are deployed and installed on the corresponding base stations, the first switching apparatus establishes the communication connection to the second switching apparatus. After receiving the switching notification message, the first switching apparatus finds, based on the base station ID of the second base station in the switching notification message, the second switching apparatus corresponding to the second base station, to send the first request message to the second switching apparatus.

The UE ID is used to uniquely identify a corresponding UE. In some embodiments of this application, the UE ID may be in a form of an IP address of the UE, or may be in a form of a device identifier of the UE. In other words, the UE ID of the target UE may be an IP address of the target UE, or a gateway side S1-U (English: User plane S1 interface) endpoint identifier of the target UE, or may be a device identifier of the target UE. Alternatively, the UE ID may be information in another form that can identify the corresponding UE. This is not limited in this application.

404. The second switching apparatus returns the first response message to the first switching apparatus.

The second switching apparatus stores information about an instance deployed on the second MEC platform corresponding to the second base station. After receiving the first request message, the second switching apparatus finds, from the second MEC platform based on the service ID of the target application service, a second instance corresponding to the application service, and obtains an instance ID of the second instance. The second switching apparatus adds an ID of the second MEC platform and the instance ID of the second instance to the first response message, and returns the first response message to the first switching apparatus. The first switching apparatus receives the first response message, and may further determine that the instance that provides the target UE with the target application service is to be switched to the second instance.

405. The first switching apparatus sends a switching preparation message to a first MEC platform.

The first switching apparatus sends the switching preparation message to the first MEC platform, where the switching preparation message carries the UE ID of the target UE, the service ID of the target application service, the ID of the second MEC platform, and the instance ID of the second instance. After receiving the switching preparation message, the first MEC platform learns that the instance that provides the target UE with the target application service is to be switched to the second instance on the second MEC platform.

Optionally, the first MEC platform may further send the switching preparation message to the second MEC platform, so that the second MEC platform also learns that the instance that provides the target UE with the target application service is to be switched to the second instance.

Step 405 is an optional step, and is used only by the first switching apparatus to notify the first MEC platform that the instance that provides the target UE with the target application service is to be switched to the second instance. The first switching apparatus may alternatively notify, in another manner, the first MEC platform that the instance that provides the target UE with the target application service is to be switched to the second instance.

For example, an application controller may also be disposed in the communications network, as shown in any accompanying drawing of FIG. 1(a), FIG. 1(b), and FIG. 1(c). The application controller is configured to manage each MEC platform in the communications network, and further manage and control all applications in the communications network. The application controller is a network device on a core network side. The application controller is connected to each MEC platform in the communications network, and is configured to send control information to each MEC platform. The application controller is further connected to a network device (where, for example, the network device may be a base station or a switching apparatus) on each base station side, and is configured to control and decide an application instance based on a requirement on a user side (where, for example, UE moves between cell ranges). After receiving the preparation notification message, the first switching apparatus may send a second request message to the application controller. The second request message carries the service ID of the target application service and the location information of the target UE, and is used to request the application controller to return the information about the new instance providing the target application service. After receiving the second request message, the application controller determines, based on the location information of the target UE, that the target UE is to access the second MEC platform, and further, the application controller coordinates with the second MEC platform to determine the second instance providing the target application service. In this case, the second MEC platform also learns that the instance that provides the target UE with the target application service is to be switched to the second instance.

Optionally, if the target application service applies for a service for which packet forwarding needs to be performed in an instance switching preparation phase when the target application service performs instance registration on the MEC platform, the first switching apparatus may further perform some switching preparation work. The instance switching preparation phase is a time period from a moment at which the first switching apparatus determines, before the target UE successfully accesses the second base station, that the instance that provides the target UE with the target application service is to be switched to the second instance to a moment at which the first switching apparatus instructs, after the target UE accesses the second base station, the first MEC platform to perform instance switching. For example, the switching preparation work means: The first switching apparatus generates a packet forwarding policy, and sends the packet forwarding policy to a corresponding forwarding device (for example, a gateway device). The forwarding device completes packet forwarding work between the target UE and the instance. The packet forwarding policy is used to instruct the forwarding device to: in the instance switching preparation phase, forward an uplink packet of the target UE to the second instance based on the packet forwarding policy, and forward a downlink packet of the second instance to the target UE. In this way, even in the instance switching preparation phase (that is, when the target UE is still connected to the first base station), the target UE can exchange data with a destination instance. The following describes content of the packet forwarding policy by using an example.

In the instance switching preparation phase, the target UE may exchange data with the second instance providing the target application service. For example, the two parties establish a transmission control protocol (English: transmission control protocol, TCP for short) connection in advance. Therefore, a bottom-layer link connection needs to be established between a gateway corresponding to the first base station and a gateway corresponding to the second base station. To be specific, the bottom-layer link connection is: a first gateway (the gateway corresponding to the first base station)-a second gateway (the gateway corresponding to the second base station). The bottom-layer link connection forms a service forwarding tunnel. Establishment of the service forwarding tunnel is completed by the first gateway and the second gateway. For example, based on a tunnel of a tunneling protocol for user plane (English: Tunneling Protocol for User Plane, GTP-U for short) type, the first gateway sends a tunnel identifier of the first gateway to the second gateway, and after receiving the tunnel identifier of the first gateway, the second gateway sends a tunnel identifier of the second gateway to the first gateway. In this way, the two gateways can identify a tunnel type and the tunnel identifier, thereby establishing the service forwarding tunnel. In this case, a packet exchanged between the target UE and the target application service is still used for service identification on the first gateway. The first switching apparatus sends the packet forwarding policy to the first gateway. To enable the first gateway to identify a target packet sent to the second instance, to forward the target packet by using the service forwarding tunnel, the first switching apparatus further needs to create a service feature based on the instance ID of the second instance, add the service feature to the packet forwarding policy, and send the packet forwarding policy to the first gateway. After receiving the packet, the first gateway determines, based on the service feature, whether the packet is a packet that needs to be sent by the target UE to the second instance. The service feature may be a service flow feature of packet exchange between the target UE and the instance providing the target application service. For example, the service feature may be quintuple information or some information in a quintuple. The quintuple information may include: the IP address of the target UE, an IP address of the second instance, a transport protocol, a target port number, and a source port number. Some information in the quintuple may include the IP address of the second instance and/or a port number.

For an uplink service, the first gateway identifies an uplink service flow between the target UE and the second instance. For example, an identification manner is to determine whether the exchanged packet carries the instance ID of the second instance. If the exchanged packet carries the instance ID of the second instance, it indicates that the packet is a packet exchanged between the target UE and the second instance. If the exchanged packet does not carry the instance ID of the second instance, it indicates that the packet is not a packet exchanged between the target UE and the second instance. The packet is forwarded to the second instance by using the service forwarding tunnel. For example, the target UE may send, in a manner of an uplink packet to the second instance by using the service forwarding tunnel, information about a transport protocol or context content used for connecting the target UE to the first instance.

For a downlink service, a processing manner of the second gateway is: The second gateway forwards the downlink service of the target UE to the first gateway by using the service forwarding tunnel, and the first gateway performs service identification and then forwards the downlink service to the first base station. After the UE is handed over to the second base station, and an S1-U transmission channel between the second base station and UE of the second gateway is established, the downlink service of the target UE is directly sent to the second base station.

Optionally, if the target application service applies for a service for which packet forwarding needs to be performed in the instance switching preparation phase when the target application service registers on the first MEC platform, after obtaining the instance ID of the second instance, the first MEC platform further needs to send the instance ID (for example, the IP address) of the second instance to the target UE, so that the target UE can exchange data with the second instance.

In the instance switching preparation phase, the uplink packet sent by the target UE may be forwarded to the second instance by using the service forwarding tunnel between the first gateway and the second gateway. However, in the prior art, after the target UE sends the uplink packet to the first gateway, if the target UE accesses the second base station and starts the instance switching when the packet has not been forwarded to the first instance, the packet cannot be forwarded to the second instance, and is discarded. According to this solution in this application, the instance switching does not cause discard of the uplink packet sent by the target UE.

406. The first MEC platform coordinates with the second MEC platform to perform data synchronization preparation.

After receiving the switching preparation message, the first MEC platform coordinates with the second MEC platform to perform the data synchronization preparation.

The data synchronization preparation may be that the first MEC platform sends some data to the second MEC platform, and after receiving the data, the second MEC platform updates the data to the second instance. For example, the data includes: a transport protocol between the target UE and the first instance or static context content.

It should be noted that, as described in step 405, if the first switching apparatus has completed the switching preparation work, the first switching apparatus may notify the first MEC platform that the first MEC platform does not need to coordinate with the second MEC platform to perform the data synchronization preparation, and step 406 may be skipped.

407. The target UE accesses the second base station.

When the target UE accesses the second base station, the target application service of the target UE is still supported by the first instance on the first MEC platform. Therefore, the target UE continues to maintain an air interface connection to the first base station.

It should be noted that a process of accessing the second base station by the target UE described in step 407 and switching preparation processes of the first base station, the second base station, the first switching apparatus, the second switching apparatus, the first MEC platform, and the second MEC platform that are described in steps 402 to 406 are performed in a same time period. After the first base station decides that the target UE is to be handed over to the second base station (that is, after step 401), the procedure of accessing the second base station by the target UE starts. In this application, in the time period of accessing the second base station by the target UE, a network side device determines the destination instance and performs the switching preparation work for switching of the instance that provides the target UE with the target application service at the same time. Even after the target UE accesses the second base station, the switching preparation work is still not completed. However, compared with the prior art, in this solution, a manner of determining the destination instance and preparing for the switching in advance to complete the instance switching is still faster.

408. After the target UE accesses the second base station, the second base station sends a notification message to the first base station.

The notification message indicates that the target UE has successfully accessed the second base station. Optionally, because the target UE does not release the air interface connection to the first base station at this time, the notification message may also be sent by the target UE to the first base station.

409. The first base station sends a switching notification message to the first switching apparatus.

After the target UE is handed over from the first base station to the second base station, the first base station sends the switching notification message to the first switching apparatus. The switching notification message carries the UE ID of the target UE. For example, after the target UE establishes a radio resource control (English: Radio Resource Control, RRC for short) connection to the second base station, the target UE or the second base station sends the notification message to the first base station. After receiving the notification message, the first base station sends the switching notification message to the first switching apparatus. Alternatively, the first base station may send the switching notification message to the first switching apparatus after receiving an end marker (English: end marker) packet (indicating a packet finally sent by a core network on a source side path) sent by the core network (indicating that the target UE has accessed the second base station).

Optionally, if the first switching apparatus and the gateway are integrated, the first switching apparatus receives the end maker packet sent by the core network earlier than the first base station. In this case, the first switching apparatus may directly perform step 410, and the first base station does not need to send the switching notification message.

410. The first switching apparatus sends a switching instruction message to the first MEC platform.

After receiving the switching notification message, the first switching apparatus sends the switching instruction message to the first MEC platform. The first MEC platform receives the switching instruction message. The switching instruction message carries the UE ID of the target UE, and is used to instruct the first MEC platform to switch the instance that provides the target UE with the target application service.

411. The first MEC platform coordinates with the second MEC platform to perform the instance switching.

After receiving the switching instruction message, the first MEC platform coordinates with the second MEC platform to hand over the target application service on the target UE from the first instance to the second instance, to complete data migration. The data migration means that the first MEC platform sends all data related to the target UE in the first instance to the second MEC platform, and then the second MEC platform updates the data to the second instance. It should be noted that, in the foregoing switching preparation phase, if the target UE or the first MEC platform has updated some data to the second instance, in this step, the first MEC platform does not need to send the foregoing data to the second MEC platform, thereby reducing a data migration time.

412. The target UE releases a service connection to the first instance on the first MEC platform.

After the instance that provides the target UE with the target application service is switched from the first instance to the second instance, and the data migration is completed, the target UE releases the service connection to the first instance on the first MEC platform.

It should be noted that step 412 is an optional step. An implementation described in step 412 is that when the first MEC platform coordinates with the second MEC platform to switch the instance, the target UE is instructed to change an address of the instance providing the target application service to an address of the second instance. Therefore, the target UE needs to establish a service connection to the second instance based on the address of the second instance, and releases the service connection to the first instance.

Optionally, in an implementation, after the first MEC platform coordinates with the second MEC platform to switch the instance, the target UE does not sense that the address of the instance has been changed, and therefore, the target UE may continue to perform service exchange with the first instance, and an exchanged packet is forwarded by a network side to the second instance according to an address translation rule. Therefore, the target UE does not need to release the service connection to the first instance.

Optionally, in another implementation, the target UE uses a service address of the target application service when accessing the target application service. Therefore, regardless of an instance to which the target application service is handed over to perform service exchange with the target UE, the target UE does not sense an address change of the instance, and still uses the service address of the target application service for the service exchange. Therefore, the target UE does not sense a specific instance with which the target UE performs the service exchange, and the step in which the target UE releases the service connection to the first instance does not exist.

In addition, it should be noted that before the data of the first instance has completely migrated to the second instance, the target UE may still maintain a connection and exchange with the first instance. For example, the target UE performs signaling exchange with the first instance to release a TCP connection. Alternatively, the target UE performs little service exchange with the first instance. In the instance switching preparation phase, the first switching apparatus notifies the second switching apparatus of the service feature, and the second switching apparatus sends the packet forwarding policy to the second gateway, where the packet forwarding policy includes the service feature. After receiving a packet, the second gateway determines, based on the service feature, whether the received packet is a packet exchanged between the target UE and the instance providing the target application service. The service feature may be a service flow feature of packet exchange between the target UE and the instance providing the target application service. For example, the service feature may be quintuple information or some information in a quintuple. The quintuple information may include: the IP address of the target UE, an IP address of the first instance, the transport protocol, a target port number, and a source port number. Some information in the quintuple may include the IP address of the first instance.

For an uplink service of the first instance, the second gateway performs service flow identification. The second gateway identifies the uplink packet by using the packet forwarding policy sent by the second switching apparatus. If the uplink packet is a service packet sent by the target UE to the first instance, the uplink packet is forwarded to the first instance by using the service forwarding tunnel.

A downlink service of the first instance is forwarded and processed by the first gateway. A processing manner of the first gateway is: If a downlink S1-U between the first gateway and the first base station has been released, the first gateway forwards an identified downlink packet to the second gateway, the second gateway forwards the downlink packet to the second base station, and the second base station forwards the downlink packet to the target UE; or if a downlink S1-U between the first gateway and the first base station has not been released, an identified downlink packet is directly forwarded to the first base station, and then is forwarded by the first base station to the target UE.

In the solution described in the embodiment of FIG. 4, before sending the switching preparation message to the first MEC platform, the first switching apparatus has determined that the first instance that provides the target UE with the target application service is to be switched to the second instance on the second MEC platform. Optionally, a step of determining that the first instance that provides the target UE with the target application service is to be switched to the second instance on the second MEC platform may also be performed by the first MEC platform. The first switching apparatus does not send the instance ID of the second instance to the first MEC platform. Instead, the first switching apparatus sends the location information of the target UE to the first MEC platform, and the first MEC platform coordinates with the second MEC platform to determine that the instance that provides the target UE with the target application service is to be switched to the second instance. A manner of coordinative determining is described in step 302 in the embodiment of FIG. 3. Details are not described herein again. Based on this implementation, steps 403 and 404 in the embodiment of FIG. 4 are optional steps. To be specific, the first switching apparatus does not need to obtain the instance ID of the second instance. Therefore, the switching preparation message sent by the first switching apparatus to the first MEC platform carries the UE ID of the target UE, the service ID of the target application service, and the location information of the target UE. After receiving the switching preparation message, the first MEC platform determines the second MEC platform based on the location information of the target UE, and coordinates with the second MEC platform to obtain the instance ID of the second instance based on the service ID of the target application service. In this case, the second MEC platform also learns that the instance that provides the target UE with the target application service is to be switched to the second instance.

It should be noted that an expression form of the UE ID herein may be the same as or different from that of the UE ID described in step 402 of FIG. 4. The UE ID herein is an identifier used between a switching apparatus and an instance on an MEC platform, and is usually represented in a form of an IP address. The UE ID described in step 402 is an identifier used between a switching apparatus and a base station, and may be represented in a form of an IP address, or may be represented in a form of a device identifier, a device name, or the like.

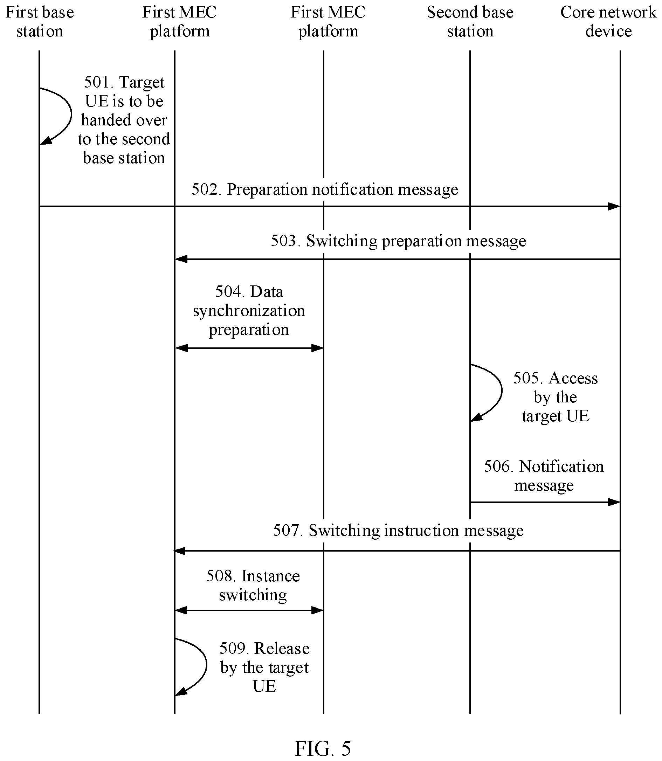

Optionally, a function of the switching apparatus in the foregoing embodiment may alternatively be integrated with a core network device. In other words, the core network device has the function of the switching apparatus. With reference to FIG. 5, a detailed procedure of another embodiment of an instance switching method provided in this application is described below by using an example. A core network device in the embodiment of FIG. 5 may be a network device in the core network in any communications network of FIG. 1(a) to FIG. 1(c). The core network device in FIG. 5 has a function of the switching apparatus in the embodiments of FIG. 2 to FIG. 4. The following describes the procedure.

501. A first base station determines that target UE is to be handed over to a second base station.

For detailed content, refer to step 401 in the embodiment of FIG. 4. Details are not described herein.

502. The first base station sends a preparation notification message to the core network device.

After confirming that the base station of the target UE is to be switched, the first base station sends the preparation notification message to the core network device. The core network device receives the preparation notification message.

The preparation notification message is used to notify the core network device that the target UE is to access the second base station, to trigger an instance switching preparation procedure. The preparation notification message includes a UE ID of the target UE and a base station ID of the second base station. Optionally, the preparation notification message may alternatively be sent by the second base station to the core network device. If the second base station receives a handover request sent by the first base station, when confirming that the target UE can access the second base station, the second base station may send the preparation notification message to the core network device.

503. The core network device sends a switching preparation message to a first MEC platform. The first MEC platform receives the switching preparation message sent by the core network device.

The core network device sends the switching preparation message to the first MEC platform, where the switching preparation message carries the UE ID of the target UE and an instance ID of a second instance providing a target application service, and is used to notify the first MEC platform that an instance that provides the target UE with the target application service is to be switched to the second instance.

Optionally, if the target application service applies for a service for which packet forwarding needs to be performed in an instance switching preparation phase when the target application service performs instance registration on the first MEC platform, in the switching preparation phase, the core network device may further generate a packet forwarding policy, and sends the packet forwarding policy to a corresponding forwarding device (for example, a gateway device), and the forwarding device completes packet forwarding work between the target UE and the instance. Detailed execution content is similar to that described in step 405 in the embodiment of FIG. 4. For example, a service forwarding tunnel is still established by the first gateway and the second gateway, and a function and an operation of a first switching apparatus are implemented by the core network device. Details are not described herein again.

504. The first MEC platform coordinates with a second MEC platform to perform data synchronization preparation.

For detailed content, refer to step 406 in the embodiment of FIG. 4. Details are not described herein again.

505. The target UE accesses the second base station.

For detailed content, refer to step 407 in the embodiment of FIG. 4. Details are not described herein again.

506. The second base station sends a notification message to the core network device, where the notification message indicates that the target UE has accessed the second base station.

507. The core network device sends a switching instruction message to the first MEC platform.

After detecting that the target UE has accessed the second base station, the core network device sends the switching instruction message to the first MEC platform. The first MEC platform receives the switching instruction message. The switching instruction message carries the UE ID of the target UE, and is used to instruct the first MEC platform to switch the instance providing the target UE with the target application service.

508. The first MEC platform coordinates with the second MEC platform to perform instance switching.

For detailed content, refer to step 411 in the embodiment of FIG. 4. Details are not described herein again.

509. The target UE releases a service connection to a first instance on the first MEC platform.

For detailed content, refer to step 412 in the embodiment of FIG. 4. Details are not described herein again.

Optionally, in a possible implementation, an application controller may further be independent of the core network device, and the application controller is configured to centrally manage the first MEC platform and the second MEC platform. As shown in the embodiment of FIG. 5, signaling exchange between the core network device and the first MEC platform and signaling exchange between the core network device and the second MEC platform both needs to be forwarded by using the application controller. Based on this implementation, the switching preparation message in step 503 in the embodiment of FIG. 5 may carry the UE ID of the target UE and location information of the target UE. Therefore, the application controller determines, based on the location information of the target UE, the second MEC platform to be accessed by the target UE, to determine the instance ID of the second instance. Another processing procedure is similar to that in the embodiment of FIG. 5. Details are not described herein again.

Optionally, in another possible implementation, an independent proxy network element may further be deployed, on each MEC platform, for the core network device. In this way, when the MEC platform needs to send signaling to the core network device, the MEC platform only needs to perform local exchange.

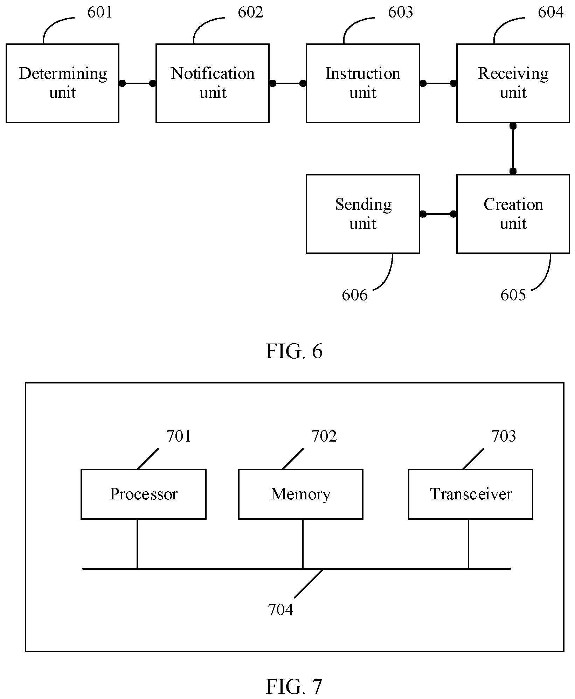

Referring to FIG. 6, FIG. 6 shows an embodiment of a switching apparatus according to an embodiment of this application. The switching apparatus is the first switching apparatus in any embodiment of FIG. 2 to FIG. 5, and includes:
a determining unit 601, configured to: before target user equipment UE moves into a cell range of a second base station and successfully accesses the second base station, determine that a first instance that is on a first mobile edge computing MEC platform and that provides the target UE with a target application service is to be switched to a second instance on a second MEC platform, where the target UE is UE that accesses a first base station, the first MEC platform is configured to provide UE in a cell of the first base station with the target application service, and the second MEC platform is configured to provide UE in a cell of the second base station with the target application service;
a notification unit 602, configured to: before the target UE successfully accesses the second base station, notify the first MEC platform that the first instance that provides the target UE with the target application service is to be switched to the second instance; and
an instruction unit 603, configured to: after the target UE successfully accesses the second base station, instruct the first MEC platform to switch the first instance that provides the target UE with the target application service to the second instance on the second MEC platform.

Optionally, the determining unit 601 is specifically configured to:
obtain location information of the target UE;
send a first request message to a second switching apparatus based on the location information of the target UE, where the first request message includes a service identifier ID of the target application service, the second switching apparatus is configured to provide UE connected to the second base station with an instance switching service, and the service ID of the target application service is associated with the second instance on the second MEC platform;
receive a first response message from the second switching apparatus, where the first response message carries an instance ID of the second instance; and
determine, based on the instance ID of the second instance, that the first instance that is on the first MEC platform and that provides the target UE with the target application service is to be switched to the second instance on the second MEC platform.

Optionally, the notification unit 602 is specifically configured to:
send a switching preparation message to the first MEC platform, where the switching preparation message carries a UE identifier ID of the target UE and the instance ID of the second instance.

Optionally, the apparatus further includes:
a receiving unit 604, configured to: before the instruction unit instructs the first MEC platform, receive a switching notification message from the first base station, where the switching notification message carries the UE ID of the target UE, and the switching notification message is used to indicate that the target UE has successfully accessed the second base station.

Optionally, the apparatus further includes:
a creation unit 605, configured to create a service feature based on the instance ID of the second instance; and
a sending unit 606, configured to send a packet forwarding policy to a first gateway, where the packet forwarding policy is used to instruct the first gateway to: identify a target uplink packet based on the service feature, and forward the target uplink packet to a second gateway, where the target uplink packet is an uplink packet exchanged between the target UE and the target application service, the first gateway is configured to provide the first base station with a service, and the second gateway is configured to provide the second base station with a service.

When running, the units described in the embodiment of FIG. 6 may further perform steps performed by the first switching apparatus in any embodiment of FIG. 2 to FIG. 5. For detailed content, refer to the embodiments of FIG. 2 to FIG. 5. Details are not described herein again.

An embodiment of this application provides an instance switching system, applicable to a mobile communications network. As shown in any accompanying drawing of FIG. 1(a) to FIG. 1(c), the instance switching system includes: a first base station, a first mobile edge computing MEC platform, a second base station, a second MEC platform, a first switching apparatus, and a second switching apparatus, where the first MEC platform is configured to provide UE in a cell of the first base station with a target application service, the second MEC platform is configured to provide UE in a cell of the second base station with the target application service, the first switching apparatus is configured to provide UE connected to the first base station with an instance switching service, the second switching apparatus is configured to provide UE connected to the second base station with an instance switching service, and the first switching apparatus is, for example, the first switching apparatus described in any embodiment of FIG. 2 to FIG. 5.

The apparatus described in the embodiment of FIG. 6 further has an embodiment of another form. Referring to FIG. 7, the apparatus includes: a processor 701, a memory 702, and a transceiver 703, where the processor 701, the memory 702, and the transceiver 703 are connected by using a bus 704, the transceiver 703 may include a transmitter and a receiver, the memory 702 stores a computer instruction, and the processor 701 is configured to implement functions of the instance switching method according to any embodiment of FIG. 2 to FIG. 5 by executing the computer instruction. Various flexible design manners may be used for a specific implementation. For corresponding functions of components, further refer to the method embodiment. This is not limited in this application.

All or some of the foregoing embodiments may be implemented by software, hardware, firmware, or any combination thereof. When software is used to implement the embodiments, the embodiments may be implemented completely or partially in a form of a computer program product.

The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a web site, computer, server, or data center to another web site, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (English full name: read-only memory, ROM for short), a random access memory (English full name: random access memory, RAM for short), a magnetic disk, or an optical disc.

## Claims

1. An instance switching method, wherein the method comprises:
before target user equipment UE moves into a cell range of a second base station and successfully accesses the second base station, determining, by a first switching apparatus, that a first instance that is on a first mobile edge computing MEC platform and that provides the target UE with a target application service is to be switched to a second instance on a second MEC platform, wherein the target UE is UE that accesses a first base station, the first MEC platform is configured to provide UE in a cell of the first base station with the target application service, and the second MEC platform is configured to provide UE in a cell of the second base station with the target application service;
before the target UE successfully accesses the second base station, notifying, by the first switching apparatus, the first MEC platform that the first instance that provides the target UE with the target application service is to be switched to the second instance; and
after the target UE successfully accesses the second base station, instructing, by the first switching apparatus, the first MEC platform to switch the first instance that provides the target UE with the target application service to the second instance on the second MEC platform.

2. The method according to claim 1, wherein the determining, by a first switching apparatus, that a first instance that is on a first mobile edge computing MEC platform and that provides the target UE with a target application service is to be switched to a second instance on a second MEC platform comprises:
obtaining, by the first switching apparatus, location information of the target UE;
sending, by the first switching apparatus, a first request message to a second switching apparatus based on the location information of the target UE, wherein the first request message comprises a service identifier ID of the target application service, the second switching apparatus is configured to provide UE connected to the second base station with an instance switching service, and the service ID of the target application service is associated with the second instance on the second MEC platform;
receiving, by the first switching apparatus, a first response message from the second switching apparatus, wherein the first response message carries an instance ID of the second instance; and
determining, by the first switching apparatus based on the instance ID of the second instance, that the first instance that is on the first MEC platform and that provides the target UE with the target application service is to be switched to the second instance on the second MEC platform.

3. The method according to claim 1 or 2, wherein the notifying, by the first switching apparatus, the first MEC platform comprises:
sending, by the first switching apparatus, a switching preparation message to the first MEC platform, wherein the switching preparation message carries a UE identifier ID of the target UE and the instance ID of the second instance.

4. The method according to any one of claims 1 to 3, wherein before the instructing, by the first switching apparatus, the first MEC platform, the method further comprises:
receiving, by the first switching apparatus, a switching notification message from the first base station, wherein the switching notification message carries the UE ID of the target UE, and the switching notification message is used to indicate that the target UE has successfully accessed the second base station.

5. The method according to any one of claims 1 to 4, wherein the method further comprises:
creating, by the first switching apparatus, a service feature based on the instance ID of the second instance; and
sending, by the first switching apparatus, a packet forwarding policy to a first gateway, wherein the packet forwarding policy is used to instruct the first gateway to: identify a target uplink packet based on the service feature, and forward the target uplink packet to a second gateway, wherein the target uplink packet is an uplink packet exchanged between the target UE and the target application service, the first gateway is configured to provide the first base station with a service, and the second gateway is configured to provide the second base station with a service.

6. A switching apparatus, wherein when the switching apparatus is a first switching apparatus, the apparatus comprises:
a determining unit, configured to: before target user equipment UE moves into a cell range of a second base station and successfully accesses the second base station, determine that a first instance that is on a first mobile edge computing MEC platform and that provides the target UE with a target application service is to be switched to a second instance on a second MEC platform, wherein the target UE is UE that accesses a first base station, the first MEC platform is configured to provide UE in a cell of the first base station with the target application service, and the second MEC platform is configured to provide UE in a cell of the second base station with the target application service;
a notification unit, configured to: before the target UE successfully accesses the second base station, notify the first MEC platform that the first instance that provides the target UE with the target application service is to be switched to the second instance; and
an instruction unit, configured to: after the target UE successfully accesses the second base station, instruct the first MEC platform to switch the first instance that provides the target UE with the target application service to the second instance on the second MEC platform.

7. The apparatus according to claim 6, wherein the determining unit is specifically configured to:
obtain location information of the target UE;
send a first request message to a second switching apparatus based on the location information of the target UE, wherein the first request message comprises a service identifier ID of the target application service, the second switching apparatus is configured to provide UE connected to the second base station with an instance switching service, and the service ID of the target application service is associated with the second instance on the second MEC platform;
receive a first response message from the second switching apparatus, wherein the first response message carries an instance ID of the second instance; and
determine, based on the instance ID of the second instance, that the first instance that is on the first MEC platform and that provides the target UE with the target application service is to be switched to the second instance on the second MEC platform.

8. The apparatus according to claim 6 or 7, wherein the notification unit is specifically configured to:
send a switching preparation message to the first MEC platform, wherein the switching preparation message carries a UE identifier ID of the target UE and the instance ID of the second instance.

9. The apparatus according to any one of claims 6 to 8, wherein the apparatus further comprises:
a receiving unit, configured to: before the instruction unit instructs the first MEC platform, receive a switching notification message from the first base station, wherein the switching notification message carries the UE ID of the target UE, and the switching notification message is used to indicate that the target UE has successfully accessed the second base station.

10. The apparatus according to any one of claims 6 to 9, wherein the apparatus further comprises:
a creation unit, configured to create a service feature based on the instance ID of the second instance; and
a sending unit, configured to send a packet forwarding policy to a first gateway, wherein the packet forwarding policy is used to instruct the first gateway to: identify a target uplink packet based on the service feature, and forward the target uplink packet to a second gateway, wherein the target uplink packet is an uplink packet exchanged between the target UE and the target application service, the first gateway is configured to provide the first base station with a service, and the second gateway is configured to provide the second base station with a service.

11. An instance switching system, applicable to a mobile communications network, wherein the instance switching system comprises: a first base station, a first mobile edge computing MEC platform, a second base station, a second MEC platform, a first switching apparatus, and a second switching apparatus, wherein the first MEC platform is configured to provide UE in a cell of the first base station with a target application service, the second MEC platform is configured to provide UE in a cell of the second base station with the target application service, the first switching apparatus is configured to provide UE connected to the first base station with an instance switching service, the second switching apparatus is configured to provide UE connected to the second base station with an instance switching service, and the first switching apparatus is the apparatus according to claims 6 to 10.

12. A computer-readable storage medium, comprising an instruction, wherein when the instruction is run on a computer, the computer is enabled to perform the method according to any one of claims 1 to 5.

13. A computer program product comprising an instruction, wherein when the computer program product is run on a computer, the computer is enabled to perform the method according to any one of claims 1 to 5.
